# EUROPEAN PATENT APPLICATION

(11) **EP 4 265 688 A1**
(43) Date of publication of application: **25.10.2023**
(21) Application number: 21910770.3
(22) Date of filing: 21.12.2021
(51) Int. Cl.: C08L 83/07, C08K 5/5419, C08L 83/05, C09J 183/05, C09J 183/07

(54) **WATER-RESISTANT ADHESIVE POLYORGANOSILOXANE COMPOSITION**

(30) Priority: 21.12.2020 JP 2020211566
(71) Applicant: Momentive Performance Materials Japan LLC, Tokyo 107-6119 (JP)
(72) Inventor: TAKANASHI Masanori, Tokyo 107-6119 (JP)
(74) Representative: Müller-Boré & Partner Patentanwälte PartG mbB
(86) International application number: PCT/JP2021/047284
(87) International publication number: WO 2022/138627

(57) **Abstract**

This is to provide a curable polyorganosiloxane composition which comprises (a) a polyorganosiloxane having two or more curable functional group capable of causing addition reaction in one molecule; (b) a crosslinking agent having three or more crosslinking groups which have reactivity with the curable functional group of the (a) in one molecule; (c) a curing catalyst capable of catalyzing a crosslinking reaction of the (a) and (b); and (d) a silicon compound having a monovalent alkyl group of 8 to 30 carbon atoms and a hydrolyzable group which are directly bonded to a silicon atom; and in some cases, (e) scaly inorganic fine particles, and an adhesive using the same, which is improved in adhesion durability to various kinds of substrates at the portion in contact with an aqueous solution (water, LLC, salt water, etc.).

## Description

### TECHNICAL FIELD

The present invention relates to an adhesive polyorganosiloxane composition having water resistance.

### BACKGROUND ART

A variety of curable polyorganosiloxane compositions that produce rubber-like elastic materials are known as materials that can be used in adhesives. Polyorganosiloxane compositions are broadly classified into addition-cure type and moisture-cure type according to the mechanism of curing reaction. Addition-cure type polyorganosiloxane compositions are cured by light irradiation or by heating at room temperature or from 40°C to 150°C or so, and develop adhesive properties to various kinds of adherends. In Patent Document 1, an adhesive polyorganosiloxane composition containing a zirconium compound and a specific adhesion imparting agent is proposed (JP 2019-151695A).

One of the applications where there is strong demand for using polyorganosiloxane as an adhesive is in aircraft and automotive applications. In the aircraft and automotive industries, as well as in the related field of electronic materials, response to global environmental issues and demand for more compact and lightweight materials are increasing year by year, and substitution of plastic materials for metals such as iron, aluminum, etc., is being considered. For this reason, for using polyorganosiloxane compositions as adhesives, adhesive properties to various substrates are required, and investigation of materials have been carried out (JP 2003-221506A and JP 2016-199687A).

In addition, in automotive applications, the adhesive portion may come in contact with antifreeze solutions such as engine oil or LLC fluid, or be exposed to severe conditions caused by heat. Therefore, it is one of the characteristics required for adhesives to have oil resistance and minimal degradation of physical properties (JP 2003-183504A, JP 2003-327829A and JP 2015-067647A). Polyorganosiloxane compositions are also being utilized to solve the lack of reliability that has been one of the problems faced by conventionally used organic rubbers, etc.

### PRIOR ART DOCUMENTS

### PATENT DOCUMENTS

Patent Document 1: JP 2019-151695A
Patent Document 2: JP 2003-221506A
Patent Document 3: JP 2016-199687A
Patent Document 4: JP 2003-183504A
Patent Document 5: JP 2003-327829A
Patent Document 6: JP 2015-067647A

### SUMMARY OF THE INVENTION

### PROBLEMS TO BE SOLVED BY THE INVENTION

In automotive-related applications, adhesive portions are often exposed to wind and rain as well as harsh environments involving heating. Therefore, it is necessary to have water resistance performance to enhance reliability for the adhesive. In particular, it is required to be able to maintain its adhesive properties over a long period of time in the order of several years. However, existing products do not yet have sufficient water resistance characteristics. In some cases, delamination or corrosion may occur in environments where the product is immersed in water. According to the finding by the present inventors, it was found that in conventional adhesives, phenomena such as peeling, etc., from the adhered portion occurred in water resistance tests (immersion tests with the substrate to which they are adhered), and in particular, it was more remarkable in accelerated tests in warm water.

Since long-term reliability is a safety factor in aircraft and automotive applications, there is strong demand for improving water resistance of adhesives, particularly over the long term.

An object of the present invention is to provide an adhesive improved in adhesion durability to various kinds of substrates in portions in contact with an aqueous solution (water, LLC, salt water, etc.).

### MEANS FOR SOLVING THE PROBLEM

According to the investigation by the present inventors, it was found that the cause of peeling or corrosion of adhesives due to water may be a decrease in adhesive strength due to penetration of water, etc., between the adhesive and the substrate and the severing of the bond in the adhered portion. In order to prevent this, it is effective to increase the distance over which water can penetrate or to hydrophobize the adhesive to prevent penetration of water itself. The present inventors found that addition of silane compounds having long-chain alkyl groups is effective in solving this problem in addition-curing type adhesives.

### EFFECTS OF THE INVENTION

According to the present invention, it is provided a polyorganosiloxane composition that can be utilized as an adhesive, with improved adhesion durability to various kinds of substrates in portions in contact with an aqueous solution (water, LLC, salt water, etc.).

That is, the present invention relates to the following [1] to [9].
[1] A curable polyorganosiloxane composition which comprises
   (a) a polyorganosiloxane having two or more curable functional group capable of causing addition reaction in one molecule;
   (b) a crosslinking agent having three or more crosslinking groups which have reactivity with the curable functional group of the above-mentioned (a) in one molecule;
   (c) a curing catalyst capable of catalyzing a crosslinking reaction of the above-mentioned (a) and (b); and
   (d) a silicon compound having a monovalent alkyl group of 8 to 30 carbon atoms and a hydrolyzable group which are directly bonded to a silicon atom.
[2] The curable polyorganosiloxane composition described in the above-mentioned [1], wherein the above-mentioned (a) is a polyorganosiloxane having two or more alkenyl groups in one molecule, and the above-mentioned (c) is a platinum compound.
[3] The curable polyorganosiloxane composition described in the above-mentioned [1] or [2], which further comprises (e) inorganic fine particles having a scaly shape in an amount of 10 to 500 parts by mass based on 100 parts by mass of the total of the above-mentioned Components (a) to (d).
[4] The curable polyorganosiloxane composition described in the above-mentioned [3], wherein the above-mentioned inorganic fine particles having scaly shape include silica, silicate minerals or mixtures thereof.
[5] The curable polyorganosiloxane composition described in any of the above-mentioned [1] to [4], wherein the above-mentioned (d) silicon compound having a monovalent alkyl group of 8 to 30 carbon atoms and a hydrolyzable group which are directly bonded to a silicon atom is represented by the following formula: R¹ₙSi(OR²)₄₋ₙ
   (wherein R¹ represents a monovalent alkyl group having 8 to 30 carbon atoms, R² represents hydrogen or an alkyl group having 1 to 6 carbon atoms, and n is an integer from 1 to 3).
[6] The curable polyorganosiloxane composition described in any of the above-mentioned [1] to [5], wherein the above-mentioned (d) silicon compound having a monovalent alkyl group of 8 to 30 carbon atoms and a hydrolyzable group which are directly bonded to a silicon atom has a monovalent alkyl group having 8 to 20 carbon atoms.
[7] The curable polyorganosiloxane composition described in any of the above-mentioned [1] to [6], wherein the above-mentioned (d) silicon compound having a monovalent alkyl group of 8 to 30 carbon atoms and a hydrolyzable group which are directly bonded to a silicon atom is contained in an amount of 0.01 to 10.0 parts by mass based on 100 parts by mass of the whole composition.
[8] The curable polyorganosiloxane composition described in any of the above-mentioned [1] to [7], which further comprises an adhesion imparting agent.
[9] An adhesive which comprises the curable polyorganosiloxane composition described in any of the above-mentioned [1] to [8].

### EMBODIMENTS TO CARRY OUT THE INVENTION

The present invention relates to a curable polyorganosiloxane composition which comprises (a) a polyorganosiloxane having two or more curable functional group capable of causing addition reaction in one molecule; (b) a crosslinking agent having three or more crosslinking groups which have reactivity with the curable functional group of the above-mentioned (a) in one molecule; (c) a curing catalyst capable of catalyzing a crosslinking reaction of the above-mentioned (a) and (b); and (d) a silicon compound having a monovalent alkyl group of 8 to 30 carbon atoms and a hydrolyzable group which are directly bonded to a silicon atom; and in some cases, further comprises(e) inorganic fine particles.

Hereinafter, the composition of the present invention will be explained in detail with each item. Incidentally, in the present specification, "to" indicating a numerical value range is used in the sense that it includes the numerical values listed before and after it as the lower limit value and upper limit value.

When used in the present specification, "organic group" means a group containing carbon. The valency of an organic group is indicated by stating "n-valent" where n is any natural number. Accordingly, for example, "monovalent organic group" means a group containing carbon having only one bonding hand. The bonding hand may be held by an element other than carbon. Even when the valency is not specifically stated, a person skilled in the art can ascertain a suitable valency from the context.

When used in the present specification, "hydrocarbon group" means a group containing carbon and hydrogen, from which at least one hydrogen atom is removed from the molecule. Such a hydrocarbon group is not particularly limited, and may be mentioned a hydrocarbon group having 1 to 20 carbon atoms, which may be substituted by one or more substituents, for example, an aliphatic hydrocarbon group, an aromatic hydrocarbon group, etc. The above-mentioned "aliphatic hydrocarbon group" may be either of linear, branched or cyclic, and may be either of saturated or unsaturated. In addition, the hydrocarbon group may also contain one or more ring structures. Incidentally, such a hydrocarbon group may have a heteroatom(s) or a structure containing heteroatom(s) such as one or more nitrogen atoms (N), oxygen atoms (O), sulfur atoms (S), silicon atoms (Si), amide bonds, sulfonyl bonds, siloxane bonds, carbonyl groups, carbonyloxy groups, etc., at their terminals or in their molecular chains.

When used in the present specification, the substituent(s) of the "hydrocarbon group" is not particularly limited and may be mentioned a group selected from, for example, a halogen atom; a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5 to 10-membered heterocyclyl group, a 5 to 10-membered unsaturated heterocyclyl group, a C₆₋₁₀ aryl group and a 5 to 10-membered heteroaryl group, each of which may be substituted by one or more halogen atoms.

In the present specification, the alkyl group and the phenyl group may be unsubstituted or substituted, unless otherwise specifically mentioned. The substituents of such groups are not particularly limited and may be mentioned, for example, one or more groups selected from a halogen atom, a C₁₋₆ alkyl group, a C₂₋₆ alkenyl group and a C₂₋₆ alkynyl group.

### -Component (a)

The curable polyorganosiloxane composition of the present invention contains at least one polyorganosiloxane having two or more curable functional groups that can cause an addition reaction in one molecule as Component (a). Component (a) serves as a base polymer of the curable polyorganosiloxane composition. Here, "curable functional group" refers to a functional group capable of causing a curing reaction, and in the present invention, it refers to a functional group that causes an addition reaction. Each curable functional group should preferably be the same functional group, and if it is a functional group that causes an addition reaction, different kinds of functional groups can be mixedly present in the same molecule. The curable functional group can be present at any position in the polyorganosiloxane molecule. For example, in the case of a linear polyorganosiloxane, it may have a curable functional group at the terminal of the molecule or it may be present as a side chain at the portion other than the terminal. The curable functional group is, in the case of a linear polyorganosiloxane, preferably present each one at both terminals of the molecular main chain of Component (a). Also herein, in the present specification, the molecular main chain of Component (a) represents a relatively longest bonding chain in the molecule of Component (a).

The molecular skeleton of Component (a) is not particularly limited as long as the siloxane bond is the main skeleton. The siloxane skeleton may be interrupted by a divalent organic group(s). Here, in the present specification, in explaining the structure of the siloxane compound, the structural units of the siloxane compound may be sometimes mentioned by the following abbreviations. Hereinafter, these structural units are sometimes referred to as "M unit", "D unit, etc.

M: -Si(CH₃)₃O_{1/2}

M^{H}: -SiH(CH₃)₂O_{1/2}

M^{Vi}: -Si(CH=CH₂)(CH₃)₂O_{1/2}

D: Si(CH₃)₂O_{2/2}

D^{H}: SiH(CH₃)O_{2/2}

T: Si(CH₃)O_{3/2}

Q: SiO_{4/2}

Hereinafter, in the present specification, the siloxane compounds are constructed by combining the above-mentioned structural units, and it may at least partially contain the structure in which the methyl group of the above-mentioned structural units is replaced with other group including halogen such as fluorine, a hydrocarbon group such as a phenyl group, etc. Also, for example, it can be understood that when it is designated to as D^{H}₂₀D₂₀, it is not intended that 20 continuous D units are followed by 20 continuous D^{H} units, but that each unit may be arranged arbitrarily. The siloxane compound can take a variety of structures three-dimensionally depending on the T unit or Q unit. Accordingly, Component (a) can take arbitrarily any molecular skeleton, such as linear, branched-chain, cyclic, or a combination of these structures, etc. Component (a) preferably has a linear molecular skeleton.

In one embodiment of the present invention, Component (a) is not particularly limited as long as it has an average of two or more alkenyl groups bonded to a silicon atom per molecule and capable of forming a network structure by an addition reaction with the hydrosilyl group (Si-H group) of (b) described below. Component (a) typically has at least two alkenyl group-containing siloxane units in the molecule as shown by the following general formula (I):

(R¹)ₐ(R²)_{b}SiO_{(4-a-b)/2} (I)

(wherein
R¹ is an alkenyl group;
R² is a monovalent hydrocarbon group having no aliphatic unsaturated bond;
a is an integer from 1 to 3; and
b is an integer from 0 to 2, provided that a+b is from 1 to 3).

As one of the specific examples of Component (a), there may be exemplified by (a1) a linear polyorganosiloxane. As (al), there may be exemplified by a linear polyorganosiloxane represented by the following formula (1):

(R^{a})₃₋ₚRₚSi-O-(Si(R)ᵣ(R^{a})₂₋ᵣO)ₙ-SiR_{q}(R^{a})_{3-q}··· (1)

(wherein
R^{a}s are each independently a curable functional group,
Rs are each independently a monovalent organic group,
"p"s and "q"s are each independently 0, 1 or 2,
"r"s are each independently 0, 1 or 2, and
n is a number that makes a viscosity at 23°C 0.1 to 500 Pa-s).
As R, that having a hydrocarbon group, in particular, an alkyl group, an alkenyl group or an aryl group is preferred. From the viewpoint of controlling physical properties such as refractive index, etc., at least a part of R may be an aryl group such as a phenyl group, etc. A polyorganosiloxane in which R is all methyl is particularly preferably used due to ease of availability. With respect to the position of the curable functional group, a polyorganosiloxane in which r is 2 in the above-mentioned formula (1), i.e., a linear polyorganosiloxane in which at least curable functional group is present only at both terminals of the molecule, is preferred.

As one of another specific examples of Component (a), there may be exemplified by (a2) a branched alkenyl group-containing polyorganosiloxane. As (a2), there may be mentioned a branched polyorganosiloxane containing SiO_{4/2} units and R₃SiO_{1/2} units as essential units and R₂SiO_{2/2} units and/or RSiO_{3/2} units as optional units. Here, R is R¹ or R², and two or more of all Rs in one molecule are R¹ (i.e., alkenyl groups). It is preferred that at least three of all Rs in one molecule are R¹ and the remainder are R² so that they can serve as crosslinking points in the curing reaction. From the viewpoint that the cured product of the composition has excellent mechanical strength, it is preferred that the ratio of R₃SiO_{1/2} units and SiO_{4/2} units is in the range of 1:0.8 to 1:3 as a molar ratio and it is in a solid or viscous semisolid resin form at normal temperature.

In (a2), R¹ may be present as R in the R₃SiO_{1/2} unit, or may be present as R in the R₂SiO_{2/2} unit or RSiO_{3/2} unit. From the viewpoint of obtaining fast curing at room temperature, it is preferred that some or all of the R₃SiO_{1/2} units are R¹R²₂SiO_{1/2} units and some or all of the R₂SiO_{2/2} units are R¹R²SiO_{2/2} unit.

The above-mentioned Component (a) can be a compound having an aliphatic unsaturated bond, such as a (meth)acrylic group or a vinyl group, which is cured by an addition reaction, in particular, two or more Si atoms bonded to a group having an alkenyl group. Component (a) is preferably a polyorganosiloxane having two or more alkenyl groups in one molecule as curable functional groups. The curable functional group that causes an addition reaction is preferably a vinyl group.

As the polyorganosiloxane having a curable functional group that causes an addition reaction, it is preferred, in the above-mentioned formula (1), that p and q be 2, and r be 2, i.e., having a total of two groups capable of subjecting to addition reaction, one at each molecular terminal only, in particular, a vinyl group. As the polyorganosiloxane utilizable as such Component (a), commercially available material can be utilized. In addition, a polyorganosiloxane in which a curable functional group is introduced by known reaction may be used. As Component (a), by classifying according to the position or kind of substituent, degree of polymerization, etc., only one kind of compound may be used, or a mixture of two or more kinds of compounds may be used. Since Component (a) is a polyorganosiloxane, it may be a mixture of polyorganosiloxanes having various degrees of polymerization.

A formulation amount of Component (a) is not particularly limited as long as it is an amount that brings the curable polyorganosiloxane composition to a range of viscosity that can be handled. Based on the amount of Component (a), the amounts of other components can be set as appropriate within the preferred ranges shown individually below.

### ·Component (b)

The curable polyorganosiloxane composition of the present invention contains, as a crosslinking agent, a compound having three or more crosslinking groups in one molecule that are reactive with the curable functional group possessed by the above-mentioned Component (a) (hereinafter it is sometimes simply referred to as "Component (b)"). By containing the crosslinking agent, physical properties of the cured product obtained from the curable composition, for example, such as tensile strength and elastic modulus become good. As the crosslinking group possessed by Component (b), a functional group which is active for the reaction generally utilized for the curing reaction of silicone can be used. As the crosslinking group, for example, hydrogen atom directly bonded to silicon, i.e., an Si-H group can be employed. A number of the crosslinking groups possessed by Component (b) per one molecule is three or more, and therefore, a network structure can be obtained by the crosslinking reaction. Each crosslinking group may be bonded to the same silicon atom or may be bonded to the different silicon atoms.

Component (b) may be a compound having only one silicon, i.e., a derivative of silane, or it may be a compound having two or more silicons. If it is a compound having two or more silicons, it is preferred that Component (b) has a structure in which each silicon atom is connected by a siloxane bond crosslinked by an oxygen. The molecular skeleton of Component (b) containing two or more silicon atoms may be either of linear, branched-chain or cyclic. Component (b) may be used only one kind, or may be used two or more kinds simultaneously.

As the crosslinking group of Component (b), an Si-H bond may be mentioned. As the crosslinking agent having such a crosslinking group, a hydrogenpolyorganosiloxane which is a siloxane containing hydrogen group is used. The hydrogenpolyorganosiloxane is a siloxane compound having an Si-H bond, and is a component which becomes a crosslinking agent. The hydrogenpolyorganosiloxane representatively has preferably two or more unit represented by the following formula (2):

(R^{b})ₓ(R^{c})_{y}SiO_{(4-x-y)/2} (2)

(wherein
R^{b} is a hydrogen atom,
R^{c} is a C₁₋₆ alkyl group (for example, methyl, ethyl, propyl, butyl, pentyl and hexyl, and preferably methyl) or a phenyl group;
x is 1 or 2; and
y is an integer from 0 to 2, provided that x+y is from 1 to 3)
such that the number of Si-H bonds is three or more.

The siloxane skeleton in a hydrogenpolyorganosiloxane may be mentioned cyclic, branched, or linear one, preferably a cyclic or linear skeleton, and more preferably a linear skeleton. The main chain of the hydrogenpolyorganosiloxane is preferably a linear skeleton, and may be a skeleton that has a branched structure as a substituent(s). In addition, a number of hydrogen group bonded to silicon atoms contained in one molecule (i.e., it is equivalent to Si-H bond) is three or more, more preferably five or more in average per one molecule, and further more preferably eight or more. Other conditions, organic groups other than hydrogen groups, bonding positions, a degree of polymerization, structure, etc., in the hydrogenpolyorganosiloxane are not particularly limited, and in the case of a linear structure, a degree of polymerization in the range of 5 to 200, in particular in the range of 10 to 100, is preferred since it tends to improve the handling properties of the resulting composition. Specific examples of the hydrogenpolyorganosiloxanes which can be used are hydrogenpolyorganosiloxanes having linear skeleton containing eight or more units (M^{H} or D^{H} unit) having Si-H bonds, and a degree of polymerization in the range of 10 to 100.

Component (b) can contain crosslinking groups, for example, in the range of 0.1 to 20 mol, specifically, in the range of 0.2 to 10 mol based on 1 mol of the reactive functional group of Component (a). A formulation amount of Component (b) can be designed to fall within an appropriate range according to the amount of reactive functional group possessed by Component (a), using the criteria mentioned below. As Component (b), only one kind of compound may be used, or a mixture of two or more kinds of compounds may be used by classifying with the position or kind of crosslinking group, or in the case of a hydrogenpolyorganosiloxane, with its degree of polymerization. Component (b) may be a mixture of hydrogenpolyorganosiloxanes having various degrees of polymerization.

The siloxane skeleton in Component (b) may be either of linear, branched or cyclic, and linear is preferred.

Component (b) is preferably (bl) a linear hydrogenpolyorganosiloxane in which both terminals are each independently closed with R⁵₃SiO_{1/2} units, and the intermediate unit consists only of R⁵₂SiO_{2/2} units, or (b2) a hydrogenpolyorganosiloxane consisting only of R⁵₃SiO_{1/2} units and SiO_{4/2} units (in the above-mentioned respective formulae, R⁵s are each independently a hydrogen atom or a monovalent hydrocarbon group having no aliphatic unsaturated bond, provided that among R⁵s, at least three or more in average are hydrogen atoms per one molecule). In the case of (bl) and (b2), as the R⁵₃SiO_{1/2} units, there may be mentioned HR⁶₂SiO_{1/2} units and R⁶₃SiO_{1/2} units, and as the R⁵₂SiO_{2/2} units, there may be mentioned HR⁶SiO_{2/2} units and R⁶₂SiO_{2/2} unit (in the above-mentioned respective formulae, R⁶ is a monovalent hydrocarbon group having no aliphatic unsaturated bond). In the case of (bl), the hydrogen atom bonded to the silicon atom may be present at the terminal or in the intermediate unit, and it is preferred to be present in the intermediate unit.

As Component (b), particularly preferred are (b1-1) a linear polymethylhydrogensiloxane in which both terminals are closed with M units (trimethylsiloxane units) and the intermediate unit consisting only of D^{H} units (methylhydrogensiloxane units), (b1-2) a linear polymethylhydrogensiloxane in which both terminals are closed with M units (trimethylsiloxane units) and the intermediate unit consisting only of D units (dimethylsiloxane units) and D^{H} units (methylhydrogensiloxane units), and methylhydrogensiloxane unit is 0.1 to 3.0 mol per 1 mol of the dimethylsiloxane unit, or (b2-1) a polymethylhydrogensiloxane consisting only of M^{H} units (dimethylhydrogensiloxane units) and Q units (SiO_{4/2} units).

Component (b) may be one kind or a combination of two or more kinds.

When Component (b) is a hydrogenpolyorganosiloxane, its formulation amount is preferably such an amount that hydrogen atoms directly bonded to the silicon atom be in the range of 0.1 to 10.0 per a curable functional group of the above-mentioned Component (a), in particular, per one unsaturated group such as a vinyl group. If it is less than 0.1, curing does not proceed with a sufficient speed in some cases, while if it exceeds 10.0, the cured product becomes too hard, and the physical properties after curing may also be adversely affected. When the curable functional group is a vinyl group, an amount of the polyorganosiloxane having one vinyl group in the molecule can be adjusted by the ratio (HIVi ratio) of the amount of the substance of Si-H bonds and unsaturated bonds, particularly vinyl groups, possessed by the said hydrogenpolyorganosiloxane. The H/Vi ratio is preferably in the range of 0.2 to 5.0, and more preferably in the range of 0.5 to 3.0. By making the H/Vi ratio 0.2 or more, curing with a sufficient speed can be accomplished, and good adhesive properties can be achieved to various kinds of substrates. Also, by making the H/Vi ratio 5.0 or less, curing of the composition can be achieved in sufficient quantity, hardness can be maintained at a moderate level, heat resistance can be retained and good adhesive properties can be maintained.

Component (b) can contain, for example, 0.1 mol or more of the crosslinking group, and specifically 0.2 mol or more per 1 mol of the reactive functional group of Component (a) in the curable composition. Component (b) can contain, for example, 20 mol or less of the crosslinking group, specifically can contain 10 mol or less, and more specifically can contain 5 mol or less per 1 mol of the reactive functional group of Component (a).

### ·Component (c)

The curable polyorganosiloxane composition of the present invention contains a curing catalyst capable of catalyzing a crosslinking reaction of the above-mentioned Component (a) and Component (b) (hereinafter it is sometimes simply referred to as "Component (c)"). As the curing catalyst, an addition curing type catalyst is used. As a representative example, there may be mentioned a platinum catalyst. The platinum catalyst is a catalyst for curing for reacting the curing functional group of the above-mentioned Component (a) and the hydrogen group of the above-mentioned Component (b) to obtain a cured product. As this platinum compound, there may be exemplified by chloroplatinic acid, platinum olefin complex, platinum vinylsiloxane complex, platinum phosphorus complex, platinum alcohol complex, and platinum black, etc. Its formulation amount is such an amount to be 0.1 to 1,000 ppm as a platinum element based on the above-mentioned Component (a). If it is less than 0.1 ppm, it does not cure sufficiently, and also if it exceeds 1,000 ppm, no particular improvement in curing speed can be expected. In addition, depending on the application, the activity of the catalyst can be suppressed by adding a reaction suppressing agent to obtain a longer pot life. As known reaction suppressing agents for platinum group metals, there may be mentioned acetylene alcohols such as 2-methyl-3-butyn-2-ol, 3,5-dimethyl-1-hexyn-3-ol and l-ethynyl-2-cyclohexanol, etc., diallyl maleate, and tertiary amines such as tetramethylethylenediamine and pyridine, etc.

### -Component (d)

In the curable composition of the present invention, a silicon compound having a monovalent alkyl group of 8 to 30 carbon atoms and a hydrolyzable group which are directly bonded to a silicon atom is contained (hereinafter it is sometimes simply referred to as "Component (d)"). Although not bound by any particular theory, it can be considered that Component (d) has an action of making it more resistant to moisture penetration by migrating to the surface of the substrate during curing or after curing of the composition to cause either a reaction in which the hydrolyzable groups adhere to the surface of the substrate or hydrophobizes the silicone rubber itself. In addition, Component (d) can bring about an appropriate hydrophobicity to the curable composition by having an alkyl group with a relatively long carbon chain, which is thought to contribute to water resistance of the curable composition as a whole. Component (d) may be used one kind alone, or may be used in combination of two or more kinds.

The monovalent alkyl group possessed by Component (d) is a material having a carbon number of 8 to 30, and herein, it refers the carbon chain to which the carbon atoms bonded to the silicon atoms belong is a length of a carbon number of 8 or longer. A carbon number is more preferably in the range of 8 to 20 from the viewpoint of affinity with the other components in the curable composition. Examples of the monovalent alkyl group may be mentioned a linear alkyl group such as an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, an eicosyl group, a triacontyl group, etc.; and a branched-chain alkyl group such as an isononyl group, 2-methylnonyl group, etc. The monovalent alkyl group may have one or more functional groups such as bromine, chlorine, and fluorine, as long as they do not reduce hydrophobicity like hydroxyl groups.

A "hydrolyzable group" means, when used in the present specification, a group that can undergo a hydrolysis reaction, i.e., a group that can be removed from the main skeleton of a compound by a hydrolysis reaction. Examples of the hydrolyzable group may be mentioned -OR', -OCOR', -O-N=CR'₂, -NR'₂, -NHR' or a halogen atom (in these formulae, R' is a substituted or unsubstituted alkyl group having 1 to 4 carbon atoms), etc., and it is preferably -OR' (i.e., an alkoxy group) by the reasons that it difficultly causes corrosion to various kinds of substrates, it is chemically stable as a silicone composition, etc. In examples of R', an unsubstituted alkyl groups such as a methyl group, an ethyl group, a propyl group, an isopropyl group, an n-butyl group, an isobutyl group, etc.; and a substituted alkyl group such as a chloromethyl group, etc., are contained. Among these, an alkyl group, in particular, an unsubstituted alkyl group is preferred, and a methyl group or an ethyl group is more preferred. That is, as the hydrolyzable group, it is a preferred embodiment that it is an alkoxy group such as a methoxy group, an ethoxy group, a propoxy group and a butoxy group. The hydroxyl group is not particularly limited, and may be a group formed by hydrolysis of the hydrolyzable group. As the halogen atom, there may be mentioned a fluorine atom, a chlorine atom, a bromine atom and an iodine atom, and among these, a chlorine atom is preferred.

The structure of the silicon compound of Component (d) is not particularly limited as long as it has each at least one monovalent alkyl group having 8 to 30 carbon atoms and hydrolyzable group. It may have two or more alkyl groups, which may be of different kinds of alkyl groups from each other, and it is preferred for Component (d) to have one monovalent alkyl group. The hydrolyzable group may be present with two or more in one molecule, and as Component (d), that having three hydrolyzable groups is preferred. Component (d) may have a group(s) other than the monovalent alkyl group having 8 to 30 carbon atoms and the hydrolyzable group, for example, such as a lower alkyl group and a phenyl group. A number of the silicon atoms that Component (d) has in one molecule is not particularly limited, and it is preferred that the compound has 1 to 10 silicon atoms, and it is more preferred that the compound has one silicon atom. The monovalent alkyl group and the hydrolyzable group may be bonded to the same silicon atom or may be bonded to different silicon atoms. It is preferred that the monovalent alkyl group and the hydrolyzable group are bonded to the same silicon atom.

The (d) silicon compound having a monovalent alkyl group of 8 to 30 carbon atoms and a hydrolyzable group which are directly bonded to a silicon atom is preferably a compound represented by the following formula (3):

R¹ₙSi(OR²)₄₋ₙ (3)

(wherein R¹ is a monovalent alkyl group having 8 to 30 carbon atoms, preferably a monovalent alkyl group having 8 to 20 carbon atoms, R² represents hydrogen or an alkyl group having 1 to 6 carbon atoms, n is an integer from 1 to 3, and preferably 1).
In a particularly preferred embodiment, Component (d) is a compound having one monovalent alkyl group and three hydrolyzable groups on one silicon atom.

As Component (d), a silicon compound that meet the above-mentioned conditions and commercially available product may be used, or a compound prepared by methods known to those skilled in the art may be used. As the specific compound, there may be mentioned octyltrimethoxysilane, decyltrimethoxysilane, hexadecyltrimethoxysilane, octadecyltrimethoxysilane, octyltriethoxysilane, etc.

Component (d) is preferably contained in an amount of 0.01 to 10 parts by mass based on 100 parts by mass of the curable polyorganosiloxane composition of the present invention, more preferably contained in an amount of 0.1 to 5 parts by mass, and further more preferably contained in an amount of 0.3 to 2.5 parts by mass. By setting this range, the composition can be given hydrophobicity sufficient to demonstrate water resistance, while not impairing the properties when used as an adhesive.

### . Component (e)

The curable polyorganosiloxane composition of the present invention may contain a scaly inorganic filler as an optional additional component (hereinafter it is sometimes simply referred to as "Component (e)"). It can be considered that the scaly inorganic filler may play a role in spatially inhibiting moisture penetration in the adhesive layer when the curable polyorganosiloxane composition of the present invention is used as an adhesive. Therefore, Component (e) can contribute to water resistance of the curable polyorganosiloxane composition. As for inorganic fine particles, the kind is not particularly limited as long as they are scaly materials, and silicon oxides and silicate minerals are preferred, and quartz powder and mica fine powder are more preferred. These scaly inorganic fine particles may be used one kind alone, or may be used a mixture of two or more kinds.

An average particle diameter of the scaly inorganic filler is preferably, 100 µm or less from the viewpoint of maintaining dispersibility and flowability of the curable composition, more preferably 50 µm or less, and particularly preferably 30 µm or less. Here, the average particle diameter of the scaly inorganic filler means the length in the long axis direction of the scaly particles. The measured value of the average particle diameter is a median diameter (d50) measured by laser diffraction and scattering method.

Component (e) is preferably contained in an amount of 10 to 500 parts by mass based on 100 parts by mass of the total of the above-mentioned Components (a) to (d), more preferably contained in an amount of 15 to 300 parts by mass, and further preferably contained in an amount of 20 to 200 parts by mass. If the amount added is less than 10 parts by mass based on 100 parts by mass of the total of the above-mentioned Components (a) to (d), the effect on water resistance will not be sufficient, and if it is more than 500 parts by mass, the viscosity will increase and handling property may be sometimes hindered.

### [Curable polyorganosiloxane composition]

The curable polyorganosiloxane of the present invention contains the above-mentioned Components (a) to (d), and, in some cases, further contains the above-mentioned Component (e).

In the properties of the polyorganosiloxane composition of the present invention, there is no particular limitation as long as each component is uniformly mixed and has a degree of fluidity that allows application to the substrate. A viscosity of the polyorganosiloxane composition can be controlled mainly by the viscosity of Component (a), and a range of 0.1 to 500 Pa·s is preferred from the viewpoint of operability. Also, the polyorganosiloxane composition can be a one-component composition, in which all the components are mixed, or a two-component composition, in which Component (b) and Component (c) are separately formulated, etc. The choice of whether to use which of a one-component or two-component composition can be made in consideration of workability and curing conditions, etc., and the method are known to those skilled in the art.

The curable polyorganosiloxane composition of the present invention can be formulated with other known components as long as they do not impair the purpose and effect. As additives, flame retardants, adhesion imparting agents, heat resistance imparting agents, diluents, organic solvents, inorganic or organic pigments, etc., can be appropriately formulated. Also, siloxane resins that do not fall under the above-mentioned Component (a) or Component (b) may be formulated. Such a resin may be mentioned a polyorganosiloxane having only one curable functional group, a polyorganosiloxane having no curable functional group such as dimethylsiloxane, etc. These resins can be used as diluents.

### <Other resins>

The curable polyorganosiloxane composition may further contain siloxane resin(s) that do not fall under the above-mentioned Components (a) and (b). Such a resin may also be used as diluents to adjust viscosity. As such a siloxane resin, there may be used, among the resins obtained by combination of the above-mentioned M, D, T and Q units, that having no curable functional group or having only one, in particular, siloxane represented by the following formula (4):

(R^{a})₃₋ₚRₚSi-O-(SiR₂O)ₙ-SiR₃··· (4)

(wherein R^{a}, R, p and n are as defined in the formula (1))
having only one curable functional group, or siloxane represented by the formula (5):

   R₃Si-O-(SiR₂O)ₙ-SiR₃··· (5)
(wherein R and n are as defined in the formula (1))
having no curable functional group. By using such a siloxane resin, it is possible to control hardness of the curable polyorganosiloxane composition when it is cured and to control viscosity of the composition, and it is possible to respond widely to handling property and required physical properties.

Such a resin can be contained, for example, in an amount of 50 parts by mass or less based on 100 parts by mass of Component (a) in the curable polyorganosiloxane composition, specifically contained in an amount of 0.1 to 50 parts by mass, and more specifically contained in an amount of 1 to 30 parts by mass.

### <<Hydrogenpolyorganosiloxane having two hydrogen atoms bonded to silicon atom in molecule>>

The composition may further contain a hydrogenpolyorganosiloxane having two hydrogen atoms bonded to a silicon atom in the molecule. Such siloxanes can function as chain extenders by subjecting to addition reaction with Component (a). Examples of such siloxanes are as explained in Component (b), except that they have two hydrogen atoms bonded to a silicon atom in the molecule. Such siloxanes preferably have two units shown by the above-mentioned general formula (2) in Component (b) in the molecule so that the number of Si-H bonds is 2.

The siloxane skeleton in this component may be either of linear, branched or cyclic, and linear is preferred. Also, the siloxane of this component is more preferably a linear hydrogenpolyorganosiloxane in which both terminals each independently closed by R⁵₃SiO_{1/2} unit and the intermediate unit consists only of R⁵₂SiO_{2/2} units (wherein R⁵s are each independently a hydrogen atom or a monovalent hydrocarbon group having no aliphatic unsaturated bond, provided that among R⁵s, two of them are hydrogen atoms per one molecule). The hydrogen atom bonded to the silicon atom may be present at the terminals or in the intermediate unit, and it is preferred that they be present at the terminal. Therefore, as the siloxane of this component, a polymethylhydrogensiloxane in which both terminals are closed with M^{H} units (dimethylhydrogensiloxane units) and the intermediate unit consist only of D units (dimethylsiloxane units) is particularly preferred.

### <Adhesion imparting agent>

The curable polyorganosiloxane composition may further contain an adhesion imparting agent. The adhesion imparting agent is a component that improves adhesion of the cured product of the composition to substrates such as glass, metals, plastics, etc. As the adhesion imparting agent, there may be mentioned metal alkoxides, compounds having hydrolyzable silyl group(s), compounds having hydrolyzable silyl group(s) and reactive organic functional group(s) in one molecule, compounds having hydrogen atom(s) bonded to silicon atom(s) and divalent aromatic group(s) in one molecule, compounds having hydrogen atom(s) bonded to silicon atom(s) and reactive organic functional group(s) in one molecule, and/or partial hydrolytic condensation products thereof. Examples of metal alkoxides may be mentioned metal alkoxides including aluminum alkoxides such as aluminum triethoxide, aluminum tripropoxide and aluminum tributoxide; titanium alkoxides such as titanium tetraethoxide, titanium tetrapropoxide, titanium tetraisopropoxide, titanium tetrabutoxide, titanium tetraisobutoxide and titanium tetraisopropenyloxide, etc. As the adhesion imparting agent of an organic compound may be mentioned amino group-containing silanes, isocyanurates and carbasilatrane compounds. As specific examples, there may be mentioned oligomers of tetraethoxysilane and tetramethoxysilane, vinyltrimethoxysilane, vinyltriethoxysilane, 3-glycidoxypropyltrimethoxysilane, 3-glycidoxypropyltriethoxysilane, 3-glycidoxypropylmethyldimethoxysilane, 3,4-epoxycyclohexylethyltrimethoxysilane, 3-acryloxypropyltrimethoxysilane, 3-methacryloxypropyltrimethoxysilane, 3-acryloxypropylmethyldimethoxysilane, 3-methacryloxypropylmethyldimethoxysilane, 3-methacryloxypropylmethyldiethoxysilane, etc.

As the adhesion imparting agent, there may be further exemplified by the following.
(E1) organic silicon compounds having a hydrogen atom bonded to a silicon atom, and a side chain represented by the following formula (6): 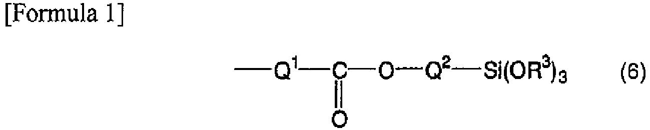 bonded to a silicon atom,
(E2) organic silicon compounds having an Si(OR³)ₙ group and an epoxy group-containing group, and/or partial hydrolytic condensation products thereof,
(E3) silane compounds having an Si(OR³)ₙ group and an aliphatic unsaturated hydrocarbon group, and/or partial hydrolytic condensation products thereof, and (E4) tetraalkoxysilane compounds represented by Si(OR⁴)₄, and/or partial hydrolytic condensation products thereof.
   (in the above-mentioned respective formulae, Q¹ represents a linear or branched alkylene group which forms a carbon chain having two or more carbon atoms between a silicon atom and an ester bond; Q² represents a linear or branched alkylene group which forms a carbon chain having three or more carbon atoms between an oxygen atom and a silicon atom at the side chain; R³ represents an alkyl group having 1 to 4 carbon atoms or a 2-methoxyethyl group; R⁴ represents an alkyl group having 1 to 3 carbon atoms; and n is an integer from 1 to 3)

(E1), (E2), (E3) and (E4) may be each one kind or a combination of two or more kinds. For example, (E) may be a combination of one kind of (E1), two kinds of (E2) and two kinds of (E3).

### <<(E1)>>

(E1) is a component that contributes to adhesive properties of the composition at room temperature by being introduced into the siloxane structure crosslinked by the addition reaction with (A) and (B) during curing of the composition, and the side chain of the formula (6) is the portion that expresses adhesive properties. In addition, the alkoxy group (hereinafter OR³ represents an alkoxy group having 1 to 4 carbon atoms or a 2-methoxyethoxy group) present in the side chain of (E1) also contributes to introduce (E2), (E3) and/or (E4) into the siloxane structure by co-hydrolysis and condensation reaction with the alkoxy group of (E2), (E3) and/or (E4).

For Q¹, an ethylene group and a 2-methylethylene group are preferred since they are easy to synthesize and handle. For Q², a trimethylene group is preferred since it is easy to synthesize and handle. For R³, a methyl group and an ethyl group are preferred, and a methyl group is particularly preferred since they provide good adhesive properties, and the alcohol produced by hydrolysis is easily volatilized.

It is preferred that the above-mentioned hydrogen atom and the above-mentioned side chain, which are characteristic of (E1), are bonded to separate silicon atoms since they are easy to synthesize. Therefore, it is preferred that the basic portion of (E1) forms a linear, branched or cyclic siloxane skeleton, and a cyclic siloxane skeleton is particularly preferred since certain compounds can be synthesized and purified in a controlled manner. A number of the Si-H bonds contained in (E1) is an optional number of one or more, and in the case of the cyclic siloxane compound, two or three is preferred.

Examples of (E1) may be mentioned the following compounds.

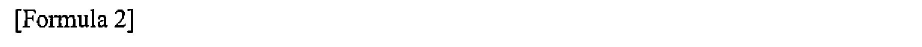

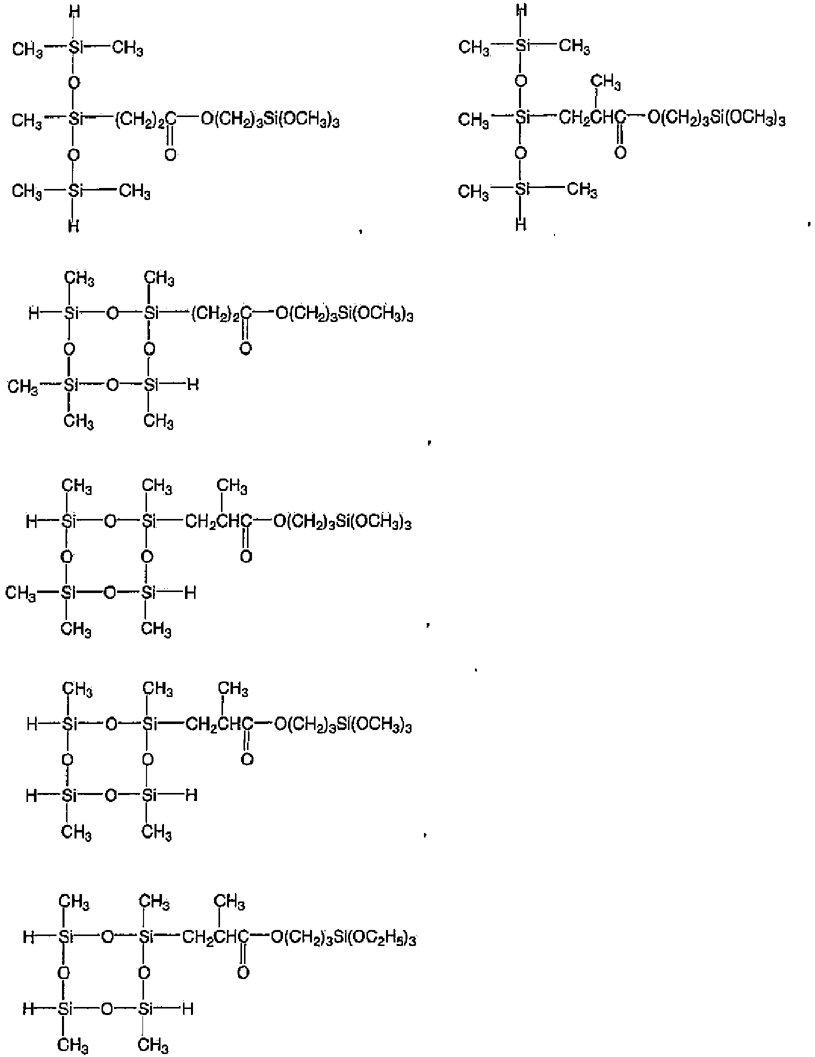

### <<(E2)>>

(E2) is a component that contributes to improving the adhesive properties of the composition at room temperature, in particular, adhesive properties to plastics by being introduced into the crosslinked siloxane structure by co-hydrolysis and condensation reaction of the alkoxy group bonded to the silicon atom and the alkoxy group bonded to the silicon atom of (E1), (E3) and/or (E4), where the epoxy group serves as the part that expresses adhesive properties.

R³ is preferably a methyl group and an ethyl group since they give good adhesive properties, and a methyl group is particularly preferred. n is preferably 2 or 3. As the epoxy group-containing group, an aliphatic epoxy group-containing group containing an ether oxygen atom such as a 3-glycidoxypropyl group; and an alicyclic epoxy group-containing group such as a 2-(3,4-epoxycyclohexyl)ethyl group, etc., are preferred since they are easy to synthesize, have no hydrolysis properties and exhibit excellent adhesive properties. The Si(OR³)ₙ group may be present with two or more in the molecule. A number of the OR³ group is preferably two or more in the molecule. The OR³ group and the epoxy group-containing group may be bonded to the same silicon atom, or may be bonded to different silicon atoms.

As (E2), there may be mentioned 3-glycidoxypropyl group-containing alkoxysilanes such as 3-glycidoxypropyltrimethoxysilane, 3-glycidoxypropyltriethoxysilane and 3-glycidoxypropyl(methyl)dimethoxysilane; 2-(3,4-epoxycyclohexyl)ethyl group-containing alkoxysilanes such as 2-(3,4-epoxycyclohexyl)ethyltrimethoxysilane, 2-(3,4-epoxycyclohexyl)ethyltriethoxysilane and 2-(3,4-epoxycyclohexyl)ethyl-(methyl)dimethoxysilane; partial hydrolytic condensation products of these silanes where n is 2 or more; and carbon/silicon bifunctional siloxanes in which a part of the methyl groups of a linear or cyclic methylsiloxane are replaced by a trimethoxysiloxy group or a 2-(trimethoxysilyl)ethyl group, and the above-mentioned epoxy group-containing group.

### <<(E3)>>

(E3) is a component that contributes to improving adhesive properties of the composition at room temperature, particularly adhesive properties to metals as an alkoxy group present in the side chain is introduced into the siloxane structure crosslinked by the addition reaction with (A) and (B) during curing of the composition and is the portion that expresses adhesive properties. In addition, the alkoxy group of (E3) also contributes to introducing (E1), (E2) and/or (E4) into the crosslinked siloxane structure through co-hydrolysis and condensation reaction with the alkoxy groups of (E1), (E2) and/or (E4). (E3) is preferably a silane compound having an Si(OR³)ₙ group and one aliphatic unsaturated hydrocarbon group, and/or a partial hydrolytic condensation product thereof.

When the alkoxy group is used in combination with other (E3) alkoxy groups, and (E2), the other (E3) and/or (E2) are introduced into the siloxane structure by co-hydrolysis and condensation reaction with the alkoxy group of (E2).

R³ is preferably a methyl group and an ethyl group, and particularly preferably a methyl group since they give good adhesive properties. n is preferably 2 or 3. The aliphatic unsaturated hydrocarbon group is preferably a monovalent group. When the aliphatic unsaturated hydrocarbon group is an alkenyl group such as vinyl, allyl or 3-butenyl, it may be bonded directly to a silicon atom, or an unsaturated acyloxy group may be bonded to the silicon atom through three or more carbon atoms like 3-acryloxypropyl or 3-methacryloxypropyl. As the unsaturated hydrocarbon group-containing group, a vinyl group and a methacryloxypropyl group, etc., are preferred since they are easy since they are easy to synthesize and handle. The Si(OR³)ₙ group may be present with two or more in the molecule. A number of the OR³ group is preferably two or more in the molecule. The OR³ group and the aliphatic unsaturated hydrocarbon group may be bonded to the same silicon atom, or may be bonded to different silicon atoms.

As (E3), there may be mentioned alkenylalkoxysilanes such as vinyltrimethoxysilane, vinyltriethoxysilane, vinyltris(2-methoxyethoxy)silane, methylvinyldimethoxysilane, allyltrimethoxysilane, allyltriethoxysilane and methylallyldimethoxysilane and/or a partial hydrolytic condensation product thereof; and (meth)acryloxypropyl(methyl)di- and (meth)acryloxypropyltri-alkoxysilanes such as 3-acryloxypropyltrimethoxysilane, 3-acryloxypropyltriethoxysilane, 3-acryloxypropyl(methyl)-dimethoxysilane, 3-methacryloxypropyltrimethoxysilane, 3-methacryloxypropyltriethoxysilane, 3-methacryloxypropyl(methyl)dimethoxysilane and/or a partial hydrolytic condensation product thereof, etc.

### <<(E4)>>

(E4) is a component that further improves adhesive properties of the composition to metals at room temperature. As R⁴, there may be mentioned a linear or branched alkyl group such as methyl, ethyl, propyl and isopropyl, and a methyl group and an ethyl group are preferable since they can be obtained easily, handling is easy and improved effect in adhesive properties is remarkable. In addition, (E4) can be used as a tetraalkoxysilane compound alone, and is preferably a partial hydrolytic condensation product of the tetraalkoxysilane compound in the point that it is excellent in hydrolysis properties and the point that toxicity becomes low.

### <<Other adhesion imparting agents>>

As the adhesion imparting agents other than (E1) to (E4), there may be mentioned metal alkoxides including aluminum alkoxides such as aluminum triethoxide, aluminum tripropoxide and aluminum tributoxide; titanium alkoxides such as titanium tetraethoxide, titanium tetrapropoxide, titanium tetraisopropoxide, titanium tetrabutoxide, titanium tetraisobutoxide, titanium tetraisopropenyl oxide, etc., zirconium acylates such as zirconium octanoate, tetra(2-ethylhexanoic acid) zirconium, zirconium stearate, etc.; zirconium alkoxides such as n-propyl zirconate, n-butyl zirconate, etc. (provided that zirconium chelate is excluded.); zirconium chelates such as tributoxy zirconium acetylacetonate, dibutoxy zirconium bis(ethylacetoacetate), zirconium tetraacetylacetonate, zirconium monoacetylacetonate, zirconium ethylacetoacetate, etc.

As the other adhesion imparting agents, there may be further mentioned compound having a hydrolyzable silyl group and a reactive organic functional group in one molecule such as 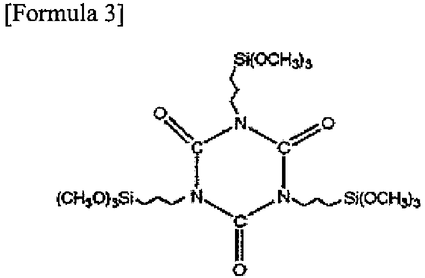 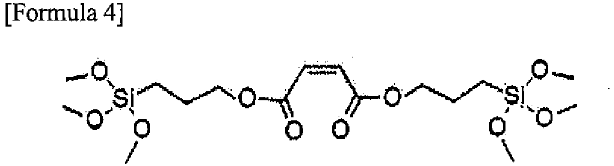 , etc., and/or partial hydrolytic condensation products thereof (provided that (E1) to (E4) are not included); a compound having hydrogen atoms and a reactive organic functional group(s) bonded to silicon atoms in one molecule such as 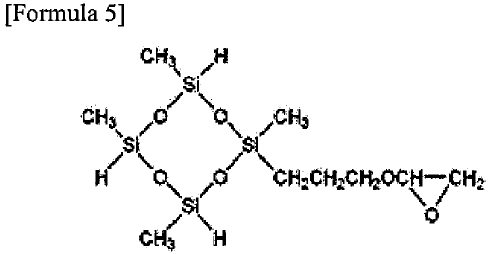 , etc.; and a compound having hydrogen atoms and a divalent aromatic group bonded to silicon atoms in one molecule such as 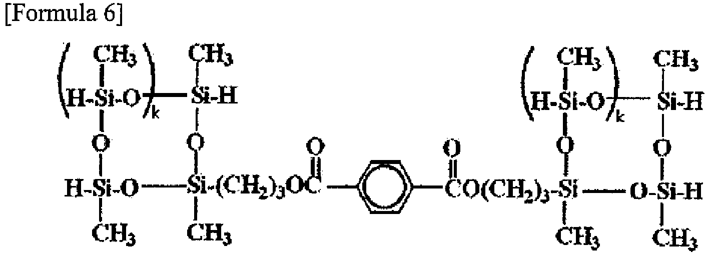 (wherein k is an integer from 1 to 3), etc. By using other adhesion imparting agents in combination, adhesive strength can be further heightened.

### (E) preferably contains a combination of (E1), (E2), (E3) and/or (E4). (E1) to (E4) may be each one kind or a combination of two or more kinds. For example, (E) may be a combination of one kind of (E1), two kinds of (E2) and two kinds of (E3).

The adhesion imparting agent can be contained, for example, in an amount of 10 parts by mass or less, specifically can be contained in an amount of 0.01 to 10 parts by mass, and more specifically can be contained in an amount of 0.1 to 5 parts by mass in the curable polyorganosiloxane composition based on 100 parts by mass of Component (a). The adhesion imparting agent may be used one kind alone, or may be used in admixture of two or more kinds.

### <Other inorganic fine particles>

The curable polyorganosiloxane composition of the present invention can contain inorganic fine particles other than the above-mentioned (e). As such inorganic fine particles, inorganic materials used as fillers in silicone rubber can be used. The particles of the inorganic material can take a shape other than scaly, for example, such as spherical, amorphous, etc. As the inorganic materials, there may be exemplified by oxides such as fumed silica, calcined silica, silica aerogel, precipitated silica, diatomaceous earth, pulverized silica, fused silica, fumed titanium oxide, iron oxide, zinc oxide, titanium oxide, aluminum oxide, etc.; materials in which the surface of the above is treated with a hydrophobic agent such as trimethylchlorosilane, dimethyldichlorosilane, hexamethyldisilazane, octamethylcyclotetrasiloxane, etc.; carbonates such as calcium carbonate, magnesium carbonate and zinc carbonate, etc.; silicates such as aluminosilicate, calcium silicate, etc.; composite oxides such as talc, glass wool, etc.; and conductive fillers such as carbon black, copper powder, nickel powder, etc.

### As other inorganic fine particles, for example, fumed silica is preferably contained in an amount of 1 to 50 parts by mass, more preferably contained in an amount of 2 to 30 parts by mass, and further preferably contained in an amount of 5 to 15 parts by mass based on 100 parts by mass of the whole curable composition of the present invention. If it is within this range, it is possible to adjust fluidity of the composition before curing and reinforce hardness, durability, etc., when the composition is cured, without impairing the effects of the present invention. With regard to inorganic fillers other than fumed silica, a person skilled in the art can change the amount of the filler according to the kind and role of the filler.

### <Solvent>

The curable polyorganosiloxane composition may contain a solvent. In this case, the curable polyorganosiloxane composition can be used by dissolving in an appropriate solvent to a desired concentration according to its application and purpose. A concentration of the above-mentioned solvent may be, for example, 80 parts by mass or less, may be 50 parts by mass or less, may be 30 parts by mass or less, and may be 20 parts by mass or less based on 100 parts by mass of the curable polyorganosiloxane composition. From the viewpoint of adjusting the viscosity of the curable composition, it is preferred to contain a solvent. By containing the solvent, handling property of the curable composition can be good.

One embodiment of the present invention is an adhesive containing the above-mentioned curable polyorganosiloxane composition. As the adhesive, it is preferred to contain the above-mentioned adhesion imparting agent in addition to the curable polyorganosiloxane composition.

In articles using the curable polyorganosiloxane composition of the present invention as an adhesive, the cured product of the said composition and the various kinds of substrates need only have an adhesive portion and are not limited in shape. For example, one of the embodiments of manufacturing an article including an adhesive portion between a substrate and a cured portion of the composition comprises a step of preparing an article including a substrate and a composition; a step of applying the above-mentioned composition to a surface of the above-mentioned substrate; and a step of curing the above-mentioned composition to adhere the above-mentioned substrate and the cured product of above-mentioned composition.

The substrate to which the adhesive containing the curable polyorganosiloxane composition of the present invention is applied is not particularly limited in its material. As the substrate, there may be used metals such as aluminum, copper, nickel, iron, brass, stainless steel, etc.; epoxy resin, polyester resin such as polyethylene terephthalate, polybutylene terephthalate (PBT) resin, etc., engineering plastics such as polycarbonate resin, acrylic resin, polyimide resin, phenol resin, polyamide resin, polyphenylene sulfide (PPS) resin, modified polyphenylene ether (PPE) resin, etc.; glass, etc. Also, if necessary, primer treatment may be applied to the wall surfaces of the voids, etc., in accordance with conventional methods. The shape, thickness, etc., of the substrate are not particularly limited.

The adhesive containing the curable polyorganosiloxane composition is applied at a predetermined thickness to the portion to be adhered on the surface of the parts, including the substrate, by the method such as dropping, injecting, spreading, extruding from a container, coating such as bar-coating, roll-coating, or screen printing, dipping method, brushing method, spraying method, dispensing method, etc. These methods are known to those skilled in the art. The composition may be applied entirely and uniformly on the surface of the above-mentioned parts, or it may be applied non-uniformly or partially, such as in lines, stripes, dots, etc. The applied thickness of the composition is usually from 0.01 to 3 mm, and preferably from 0.05 to 2 mm.

The composition coated to the surface of the above-mentioned parts can adhere the above-mentioned the substrate and the cured product of the composition by allowing to stand at room temperature (for example, 23°C) or heating to a higher temperature and curing. When heating to a higher temperature, curing can be carried out in a shorter time than at room temperature, thereby improvement in work efficiency can be achieved.

The heating conditions can be appropriately adjusted according to the heat resistant temperature of the member to which the composition is applied, and the curing time can be determined. For example, heat from exceeding room temperature (23°C) to 200°C or lower can be applied in the range for 1 minute to 2 weeks, preferably for 5 minutes to 72 hours. The heating temperature is preferably 40 to 180°C from the viewpoint of ease of operation, and particularly preferably 50 to 150°C. The heating time is preferably from 5 minutes to 72 hours from the viewpoint of simplicity of the curing processes, and particularly preferably from 5 minutes to 24 hours. Also, when it is cured at room temperature, the curing time is preferably 1 week or shorter, more preferably 72 hours or shorter, and particularly preferably 24 hours or shorter.

The articles using the curable polyorganosiloxane composition of the present invention as an adhesive have excellent durability performance including water resistance of the adhesive surface, so that it can be well as various kinds of parts in aircraft, automotive applications and electronic material fields.

### EXAMPLES

The composition of the present invention will be explained in more specifically by referring to the following Examples, but the present invention is not limited by the embodiments of these Examples.

### <Preparation of curable polyorganosiloxane composition>

### [Example 1]

As Component (a), a linear polymethylvinylsiloxane shown by M^{vi}Dₙ₁M^{vi} (wherein n1 is a value such that the viscosity at 23°C is 10 Pa s) in which a predetermined amount of M₅D^{Vi}Q₈ has been dissolved in advance and a linear polymethylvinylsiloxane shown by M^{vi}Dₙ₂M^{vi} (wherein n2 is a value such that the viscosity at 23°C is 1.0 Pa·s) and fumed silica treated with hexamethyldisilazane (HMDZ) and calcium carbonate as fillers, and scale mica (average particle diameter 23 µm) as Component (e) were transferred to a universal kneader and stirred at room temperature (23°C) for 60 minutes, and stirred under reduced pressure at 150°C for 60 minutes. By cooling the mixture to 50°C or lower, Pt-octanol complex with a platinum content of 3.4% as Component (c) and a reaction suppressing agent were added and stirred for 30 minutes. To the thus obtained mixture were added hydrogenpolyorganosiloxane shown by MD^{H}₂₀D₂₀M as Component (b), and octyltriethoxysilane (C₈H₁₇Si(OEt)₃) as Component (d) and an adhesion imparting agent, and the mixture was stirred at room temperature for 10 minutes.

As the adhesion imparting agents, 3-glycidoxypropyltrimethoxysilane, vinyltrimethoxysilane and the siloxane shown by the following formula were used. 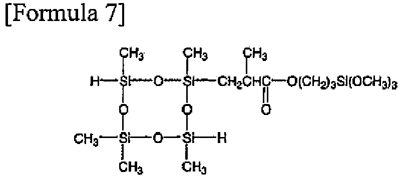 As the reaction suppressing agents, diallyl maleate and 3,5-dimethyl-1-hexyn-3-ol were used.

### [Example 2]

Composition 2 was obtained in the same manner as in Example 1, except that the amount of octyltriethoxysilane used in Example 1 with 0.5 part by mass was changed to 1.5 parts by mass.

### [Example 3]

Composition 3 was obtained in the same manner as in Example 1, except that octyltriethoxysilane used in Example 1 was changed to 0.5 part by mass of decyltrimethoxysilane (C₁₀H₂₁Si(OMe)₃).

### [Example 4]

Composition 4 was obtained in the same manner as in Example 3, except that decyltrimethoxysilane used in Example 3 with 0.5 part by mass was changed to 1.5 parts by mass.

### [Example 5]

Composition 5 was obtained in the same manner as in Example 1, except that octyltriethoxysilane used in Example 1 was changed to 0.5 part by mass of hexadecyltrimethoxysilane (C₁₆H₃₃Si(OMe)₃).

### [Example 6]

Composition 6 was obtained in the same manner as in Example 5, except that hexadecyltrimethoxysilane used in Example 5 with 0.5 part by mass was changed to 1.5 parts by mass.

### [Comparative Example 1]

The composition was obtained in the same manner as in Example 1, except that octyltriethoxysilane used in Example 1 was changed to 0.5 part by mass of hexyltrimethoxysilane (C₆H₁₁Si(OMe)₃).

### [Comparative Example 2]

The composition was obtained in the same manner as in Example 2, except that octyltriethoxysilane used in Example 2 was changed to 1.5 parts by mass of hexyltrimethoxysilane (C₆H₁₁Si(OMe)₃).

### [Comparative Example 3]

The composition was obtained in the same manner as in Example 1, except that the silane compound corresponding to Component (d) was not used.

### [Comparative Example 4]

The composition was obtained in the same manner as in Comparative Example 3, except that quartz powder (average particle diameter 5 µm) was used instead of scaly mica as inorganic fine particles.

### [Test Example 1: Peel test]

The compositions of Examples or Comparative Examples were applied to a uniform thickness (0.5 mm) on an aluminum plate with a thickness of 2 mm, and the compositions were cured by heating in a hot-air circulating dryer at 150°C for 1 hour. The aluminum plates applied with the cured product of the polyorganosiloxane composition were immersed in warm water at 80°C, and after lapsing a specified time, peeling tests were carried out. The aluminum plate was manually peeled off and the peeled surface was visually observed. The results are summarized in Tables 1 and 2. In the Table, O indicates that cohesive breakdown occurred, at which time the adhesive maintains adhesive properties to the substrate. △ indicates that cohesive breakdown and peeling are mixedly present, and × indicates that the adhesive has peeled off. At the area marked with a horizontal line (-), the test is omitted since the adhesive has already peeled off.

**[Table 1]**

| | | Example 1 | Example 2 | Example 3 | Example 4 | Example 5 | Example 6 | Compara tive Example 1 | Compara tive Example 2 | Compara tive Example 3 | Compara tive Example 4 |
|---|---|---|---|---|---|---|---|---|---|---|---|
| Component (a) | M^{vi}Dₙ₁M^{vi} 10Pas | 46.1 | 46.1 | 46.1 | 46.1 | 46.1 | 46.1 | 46.1 | 46.1 | 46.1 | 46.1 |
| | M^{vi}Dₙ₂M^{vi} 1.0Pas | 9.1 | 9.1 | 9.1 | 9.1 | 9.1 | 9.1 | 9.1 | 9.1 | 9.1 | 9.1 |
| | M₅D^{vi}Q₈ | 5.3 | 5.3 | 5.3 | 5.3 | 5.3 | 5.3 | 5.3 | 5.3 | 5.3 | 5.3 |
| Component (b) | MD^{H}₂₀D₂₀M | 1.5 | 1.5 | 1.5 | 1.5 | 1.5 | 1.5 | 1.5 | 1.5 | 1.5 | 1.5 |
| Component (c) | Pt-octanol complex (Pt cont3.4%) | 0.07 | 0.07 | 0.07 | 0.07 | 0.07 | 0.07 | 0.07 | 0.07 | 0.07 | 0.07 |
| Alkyl silane (Component (d)) | C₆H₁₃Si(OMe)₃ | - | - | - | - | - | - | 0.5 | 1.5 | - | - |
| | C₈H₁₇Si(OEt)₃ | 0.5 | 1.5 | - | - | - | - | - | - | - | - |
| | C₁₀H₂₁Si(OMe)₃ | - | - | 0.5 | 1.5 | - | - | - | - | - | - |
| | C₁₆H₃₃Si(OMe)₃ | - | - | - | - | 0.5 | 1.5 | - | - | - | - |
| Component (e) | Mica (23µm) | 24.2 | 24.2 | 24.2 | 24.2 | 24.2 | 24.2 | 24.2 | 24.2 | 24.2 | - |
| | Quartz powder (5µm) | - | - | - | - | - | - | - | - | - | 24.2 |
| Filler | HMDZ treated fumed silica | 9.1 | 9.1 | 9.1 | 9.1 | 9.1 | 9.1 | 9.1 | 9.1 | 9.1 | 9.1 |
| | CaCO₃ | 0.4 | 0.4 | 0.4 | 0.4 | 0.4 | 0.4 | 0.4 | 0.4 | 0.4 | 0.4 |
| Reaction suppressing agent | 3,5-Dimethyl-1-hexyn-3-ol | 0.06 | 0.06 | 0.06 | 0.06 | 0.06 | 0.06 | 0.06 | 0.06 | 0.06 | 0.06 |
| | Diallyl maleate | 0.3 | 0.3 | 0.3 | 0.3 | 0.3 | 0.3 | 0.3 | 0.3 | 0.3 | 0.3 |
| Adhesion imparting agent | Vinyltrimethoxysila ne | 0.3 | 0.3 | 0.3 | 0.3 | 0.3 | 0.3 | 0.3 | 0.3 | 0.3 | 0.3 |
| | Glycidoxypropyltrimethoxysilane | 0.6 | 0.6 | 0.6 | 0.6 | 0.6 | 0.6 | 0.6 | 0.6 | 0.6 | 0.6 |
| | Cyclic siloxane^{∗} | 1.2 | 1.2 | 1.2 | 1.2 | 1.2 | 1.2 | 1.2 | 1.2 | 1.2 | 1.2 |
| | Tetramethoxysilane oligomer | 1.8 | 1.8 | 1.8 | 1.8 | 1.8 | 1.8 | 1.8 | 1.8 | 1.8 | 1.8 |

| Peel test (80° warn water immersion) | | | | | | | | | | | |
|---|---|---|---|---|---|---|---|---|---|---|---|
| Initial state | | ○ | ○ | ○ | ○ | ○ | ○ | ○ | ○ | ○ | ○ |
| 7days | | ○ | ○ | ○ | ○ | ○ | ○ | ○ | ○ | ○ | × |
| 15days | | ○ | ○ | ○ | ○ | ○ | ○ | × | × | × | - |
| 30days | | n.d**^{∗∗}** | n.d | △ | ○ | △ | ○ | - | - | - | - |
| 60days | | n.d | n.d | × | ○ | × | △ | - | - | - | - |

| | | | | | | | | | | | |
|---|---|---|---|---|---|---|---|---|---|---|---|
| *Structure is as mentioned above ** not detected | | | | | | | | | | | |

In Comparative Example 3, which corresponds to a conventional adhesive, in which no silane compound having long chain alkyl groups was added, the adhered portion peeled off within two weeks of testing under the above-mentioned conditions. On the other hand, from Examples 1 to 6, it was found that water resistance for a long period of time was improved by the addition of the silane compound having long chain alkyl groups. In Comparative Example 1 and 2 in which hexyltrialkoxysilane with a small number of carbon chain was added, they showed only the same level of water resistance as Comparative Example 3 to which no silane compound was added, and stability for a long period of time could not be obtained. By comparison of Examples 1 to 6 and Comparative Examples 1 to 2, it was found that the use of silane compounds having long chain alkyl groups is more effective in increasing water resistance than alkyl silane compounds having small number of carbon chain. In addition, by comparison of Comparative Examples 3 and 4, it was shown that scaly fine particles are effective in improving water resistance.

### [Example 7]

Composition 7 was obtained in the same manner as in Example 3, except that scaly mica was changed to quartz powder (average particle size 5 µm) and tetramethoxysilane used as an adhesion imparting agent was changed to tetramethoxysilane oligomer, respectively.

### [Example 8]

Composition 8 was obtained in the same manner as in Example 7, except that the amount of decyltrimethoxysilane used in Example 7 with 0.5 part by mass was changed to 1.5 parts by mass.

### [Example 9]

Composition 9 was obtained in the same manner as in Example 7, except that decyltrimethoxysilane used in Example 7 was changed to 0.5 part by mass of hexadecyltrimethoxysilane.

### [Example 10]

Composition 10 was obtained in the same manner as in Example 9, except that hexadecyltrimethoxysilane used in Example 9 with 0.5 part by mass was changed to 1.5 parts by mass.

### [Comparative Example 5]

The composition was obtained in the same manner as in Example 7, except that decyltrimethoxysilane used in Example 7 was changed to 0.5 part by mass of hexyltrimethoxysilane.

### [Comparative Example 6]

The composition was obtained in the same manner as in Example 8, except that decyltrimethoxysilane used in Example 8 was changed to 1.5 parts by mass of hexyltrimethoxysilane (C₆H₁₁Si(OMe)₃).

### [Comparative Example 7]

The composition was obtained in the same manner as in Example 7, except that the silane compound corresponding to Component (d) was not used.

### [Test Example 2: Peel test]

A peel test of the composition was carried out under the same conditions as in Test Example 1. The results are shown in Table 2.

**[Table 2]**

| | | Example 7 | Example 8 | Example 9 | Example 10 | Comparative Example 5 | Comparative Example 6 | Comparative Example 7 |
|---|---|---|---|---|---|---|---|---|
| Component (a) | M^{vi}Dₙ₁M^{vi} 10Pas | 46.1 | 46.1 | 46.1 | 46.1 | 46.1 | 46.1 | 46.1 |
| | M^{vi}Dₙ₂M^{vi} 1.0Pas | 9.1 | 9.1 | 9.1 | 9.1 | 9.1 | 9.1 | 9.1 |
| | M₅D^{Vi}Q₈ | 5.3 | 5.3 | 5.3 | 5.3 | 5.3 | 5.3 | 5.3 |
| Component (b) | MD^{H}₂₀D₂₀M | 1.5 | 1.5 | 1.5 | 1.5 | 1.5 | 1.5 | 1.5 |
| Component (c) | Pt-octanol complex (Pt cont3.4%) | 0.07 | 0.07 | 0.07 | 0.07 | 0.07 | 0.07 | 0.07 |
| Alkyl silane (Component (d)) | C₆M₁₃Si(OMe)₃ | - | - | - | - | 0.5 | 1.5 | - |
| | C₁₀H₂₁Si(OMe)₃ | 0.5 | 1.5 | - | - | - | - | - |
| | C₁₆H₃₃Si(OMe)₃ | - | - | 0.5 | 1.5 | - | - | - |
| Component (e) | Quartz powder (5µm) | 24.2 | 24.2 | 24.2 | 24.2 | 24.2 | 24.2 | 24.2 |
| Filler | HMDZ treated fumed silica | 9.1 | 9.1 | 9.1 | 9.1 | 9.1 | 9.1 | 9.1 |
| | CaCO₃ | 0.4 | 0.4 | 0.4 | 0.4 | 0.4 | 0.4 | 0.4 |
| Reaction suppressing agent | 3,5-I7imethyl-1-hexyn-3-ol | 0.06 | 0.06 | 0.06 | 0.06 | 0.06 | 0.06 | 0.06 |
| | Diallyl maleate | 0.3 | 0.3 | 0.3 | 0.3 | 0.3 | 0.3 | 0.3 |
| Adhesion imparting agent | Vinyltrimethoxysilane | 0.3 | 0.3 | 0.3 | 0.3 | 0.3 | 0.3 | 0.3 |
| | Glycidoxypropyltrimethoxysilane | 0.6 | 0.6 | 0.6 | 0.6 | 0.6 | 0.6 | 0.6 |
| | Cyclic siloxane^{∗} | 1.2 | 1.2 | 1.2 | 1.2 | 1.2 | 1.2 | 1.2 |
| | Tetramethoxysilane | 1.8 | 1.8 | 1.8 | 1.8 | 1.8 | 1.8 | 1.8 |
| Peel test (80° warn water immersion) | | | | | | | | |
| Initial state | | ○ | ○ | ○ | ○ | ○ | ○ | ○ |
| 30days | | ○ | ○ | ○ | ○ | Δ | Δ | ○ |
| 60days | | Δ | ○ | ○ | ○ | × | × | × |
| 90days | | x | × | × | × | - | - | - |

| | | | | | | | | |
|---|---|---|---|---|---|---|---|---|
| ^{∗}Structure is as mentioned above | | | | | | | | |

By comparing Examples 7 to 10 and Comparative Examples 5 to 7, it was found that silane compounds having long chain alkyl groups similarly accomplish higher effect in improvement of water resistance also in the system having different inorganic fine particles.

### UTILIZABILITY IN INDUSTRY

The compositions of the present invention have high water resistance over a long term, and are useful for adhering substrates with each other having portions that are expected to come into contact with moisture. Therefore, it can be utilized as an adhesive for aircraft and automobiles.

## Claims

1. A curable polyorganosiloxane composition which comprises
(a) a polyorganosiloxane having two or more curable functional group capable of causing addition reaction in one molecule;
(b) a crosslinking agent having three or more crosslinking groups which have reactivity with the curable functional group of (a) in one molecule;
(c) a curing catalyst capable of catalyzing a crosslinking reaction of (a) and (b); and
(d) a silicon compound having a monovalent alkyl group of 8 to 30 carbon atoms and a hydrolyzable group which are directly bonded to a silicon atom.

2. The curable polyorganosiloxane composition according to Claim 1, wherein (a) is a polyorganosiloxane having two or more alkenyl groups in one molecule, and (c) is a platinum compound.

3. The curable polyorganosiloxane composition according to Claim 1 or 2, which further comprises (e) inorganic fine particles having a scaly shape in an amount of 10 to 500 parts by mass based on 100 parts by mass of the total of Components (a) to (d).

4. The curable polyorganosiloxane composition according to Claim 3, wherein the inorganic fine particles having scaly shape include silica, silicate minerals or mixtures thereof.

5. The curable polyorganosiloxane composition according to any one of Claims 1 to 4, wherein (d) the silicon compound having a monovalent alkyl group of 8 to 30 carbon atoms and a hydrolyzable group which are directly bonded to a silicon atom is a compound represented by the following formula:
R¹ₙSi(OR²)₄₋ₙ
wherein R¹ represents a monovalent alkyl group having 8 to 30 carbon atoms, R² represents hydrogen or an alkyl group having 1 to 6 carbon atoms, and n is an integer from 1 to 3.

6. The curable polyorganosiloxane composition according to any one of Claims 1 to 5, wherein (d) the silicon compound having a monovalent alkyl group of 8 to 30 carbon atoms and a hydrolyzable group which are directly bonded to a silicon atom has a monovalent alkyl group having 8 to 20 carbon atoms.

7. The curable polyorganosiloxane composition according to any one of Claims 1 to 6, wherein (d) the silicon compound having a monovalent alkyl group of 8 to 30 carbon atoms and a hydrolyzable group which are directly bonded to a silicon atom is contained in an amount of 0.01 to 10.0 parts by mass based on 100 parts by mass of the whole composition.

8. The curable polyorganosiloxane composition according to any one of Claims 1 to 7, which further comprises an adhesion imparting agent.

9. An adhesive which comprises the curable polyorganosiloxane composition according to any one of Claims 1 to 8.
